# EUROPEAN PATENT APPLICATION

(11) **EP 4 282 583 A1**
(43) Date of publication of application: **29.11.2023**
(21) Application number: 22382504.3
(22) Date of filing: 26.05.2022
(51) Int. Cl.: B23Q 39/04, B23K 26/00

(54) **MACHINE TOOL AND METHOD OF OPERATING THE MACHINE TOOL**

(71) Applicant: Etxe-Tar, S.A., 20870 Elgoibar (Guipúzcoa) (ES)
(72) Inventor: GABILONDO, Jose Juan, 20870 Elgoibar (Guipúzcoa) (ES)
(74) Representative: Balder IP Law, S.L.

(57) **Abstract**

A machine tool is provided with a workpiece support (1000) for supporting at least one workpiece (2001, 2002) for allowing machining of the workpiece, and a plurality of tools (11A, 12A, 21A, 22A) adapted for machining of the at least one workpiece. The machine tool being adapted for positioning the tools in relation to the workpiece support. At least one of the tools is a laser tool (21A, 22A) adapted for removal of material from the at least one workpiece. Another one of the tools may be a rotary tool (11A, 12A) adapted for removal of material from the at least one workpiece.

## Description

### TECHNICAL FIELD

The present invention relates to a machine tool for carrying out machining operations such as cutting, drilling, boring, grinding, chamfering, milling, broaching, etc., on workpieces requiring machining at different positions, such as at different positions in an X-Y plane.

### STATE OF THE ART

It is known in the art to machine workpieces to give components their final shape and configuration. For example, the shape of a workpiece can be modified by machining (for example, by removing material in correspondence with one or more edges or sides of the workpiece) and a workpiece can be provided with recesses and openings (through holes) by machining.

For example, many products, such as vehicles, include elongate beams and/or profiles, such as extruded aluminum profiles, used for example for the battery boxes of electrical vehicles. These profiles typically require machining for edge trimming, generation of through holes with different shapes and dimensions, etc.

Machining of metal workpieces can typically take place in a machine tool comprising one or more tool carriers and a workpiece support, arranged so that the machine tool can generate a relative movement between each tool carrier and the workpiece or workpieces according to three different axes (typically orthogonal axes, typically referred to as the X, Y and Z axes) and optionally with the capacity of rotation or pivotation of tool carrier(s) and/or workpiece(s). These relative movements serve to correctly position each tool in relation to the respective workpiece, prior to and during machining. The tools are typically rotary tools and the tool carriers typically include drive means for driving the tools, such as for rotating the tools about an axis, such as about an axis parallel with a Z axis of the machine tool. Typically, machine tools include tool spindles for rotating the tools.

Different machining operations may require different tools, for example, cutting, drilling, boring, grinding, chamfering, milling and broaching tools. For example, the drilling of through holes with different shapes and diameters may require the use of different tools. Thus, frequently, machine tools comprise tool magazines for automatic tool exchange operations that are carried out by the machine tool during machining of a workpiece. Sometimes machine tools include more than one tool carrier adapted for operating on the same workpiece. These tool carriers can carry different tools, which can serve to reduce the time spent on tool changes during machining of the workpiece, thus reducing the time needed to complete the machining of a workpiece. However, it is frequent that at least some tool change operations are needed during the machining of a workpiece. For example, different drill tools may be needed if the workpiece is to be provided with through holes having different diameters. In order to enhance productivity, a machine tool can typically include a plurality of tool carriers for simultaneous and/or sequential machining of one or more workpieces. Examples of such machine tools are known from, for example, GB-2262461-A and US-2757560-A.

Sometimes workpieces comprise parts that are flexible and that may tend to give away, become bent or start to vibrate during machining, for example, during machining using a rotary tool such as a drilling or milling tool. For example, extruded aluminium profiles may feature portions that extend in an overhanging manner from the basic body of the profile. These parts may be deformed and/or vibrate during machining with a rotary tool in a way that is incompatible with the required manufacturing tolerances, and/or that may increase the wear of the tool in a non-desired manner.

Apart from the use of rotary tools for carrying out machining operations for removal of material such as cutting, it is also known to use laser tools for removing material by projecting a laser beam onto the material so as to heat the material. Laser tools for operations such as cutting are typically provided with exhaust nozzles to project a stream of gas (such as air) onto the workpiece in the area being heated by the laser beam. The projected gas stream may serve for the purpose of driving the molten material out of the cutting gap, for the purpose of cooling, and/or for the purpose of protecting the optical lens of the laser tool from soiling. Laser cutters are typically used for cutting large objects, such as metal plates, whereby the workpieces are placed on a table-like structure, whereas the laser head is displaced above it, mounted on bridge-like structures for displacing the laser tool in the X-Z plane. Examples of this kind of laser cutters are disclosed in US-9718148-B2, US-2009/001062-A2, US-2014/0083985-A1, US-2017/216964-A1, US-2021/086296-A1 and WO2018/002670-A1. A somewhat different arrangement using displaceable arms extending in different directions is known from WO-2019/244077-A1.

Even though sometimes both laser cutters and rotary tools can be considered for carrying out certain machining operations on a certain type of workpiece, the two tool categories are typically considered as conceptually different, for several reasons. For example, high power lasers are typically expensive and laser tools are typically considered sensitive, for example, due to the need to avoid the lens at the output end of the laser tool from becoming soiled. The frequent need for using gas nozzles is also a restriction when it comes to accessing certain parts of the workpieces, for example, when there is a need to perforate a plurality of walls situated one behind the other. On the other hand, rotary machining tools are subjected to wear and typically need to be replaced even before being completely worn out, to avoid the risk of the tools breaking during machining and/or the risk of poor machining quality. The need for tool replacement due to wear hampers productivity. Also, different tools may be needed for carrying out different operations, such as for generating through holes having different diameters, thereby requiring automatic tool change operations to be carried out, which can be time consuming and thereby increase the cycle time, that is, the time needed to complete the machining of a workpiece.

### DESCRIPTION OF THE INVENTION

A first aspect of the invention relates to a machine tool comprising a workpiece support for supporting at least one workpiece for allowing machining of the workpiece. In some embodiments the workpiece support is designed for supporting a plurality of workpieces and/or for supporting one or more elongate workpieces extending in parallel with a first axis of the machine tool, referred to as a X axis herein, and which may be vertical or horizontal. In many embodiments the X axis is a horizontal axis. In some embodiments the machine tool may be especially advantageous for the machining of elongate workpieces, such as metal workpieces, such as metal profiles or beams, for example, aluminium profiles (such as extruded aluminium profiles) or beams, for example, profiles or beams intended to form part of a vehicles, such as of the battery box of an electric vehicle. Such profiles or beams may have a substantial length, and may require complex machining of portions that are likely to be deflected and/or to vibrate if contacted by a rotary tool, such as flanges extending from a main body of the workpiece.

The workpiece support may include, for each workpiece, an elongate support member to which the respective workpiece can be clamped. The workpiece, or the support member clamping the workpiece, may be arranged so that it can pivot (for example, carrying out a full 360 degree rotation, or a more limited rotation such as a rotation by up to 270, 180 or 90 degrees) around an axis parallel with the X axis of the machine tool, for the purpose of setting a suitable angle of attack between workpiece and tool, and/or for transferring the workpiece from a position for loading and unloading the workpiece onto and from the workpiece support, respectively, to a position for machining the workpiece, in which the workpiece faces the respective tool so that the tool can carry out machining operations on the workpiece. In some embodiments, the elongate support member can be arranged between two supports, such as between two substantially vertical columns, which may be spaced from each other by a distance of, for example, more than 1 meter. When there are several elongate support members, they may be arranged in parallel, one after the other along an axis parallel with a second axis of the machine tool, referred to as the Y axis herein. Thus, the elongate support members may be arranged one above the other when the Y axis is a vertical axis, as it is in many embodiments of the invention. The Y axis may be perpendicular to the X axis.

The machine tool further comprises a plurality of tools (that is, at least two tools) adapted for machining of the at least one workpiece. When the workpiece support is arranged for supporting a plurality of workpieces, the tools may be arranged so that each tool is assigned to one of the workpieces, or so that two or more tools may operate on one of the workpieces, for example, so as to carry out different machining operations on one workpiece, simultaneously or sequentially. In some embodiments, a tool may be arranged so that is can operate on more than one of the workpieces, for example, by being sufficiently displaceable in a direction parallel with the Y axis of the machine tool.

The machine tool is adapted for positioning the tools in relation to the workpiece support, for example, by displacing the tools according to one or more of the X, Y and Z axes of the machine tool, the X, Y and Z axis being perpendicular to each other, and/or by displacing the workpiece support according to one or more of the X, Y and Z axes.

At least one of the tools is a laser tool adapted for removal of material from the at least one workpiece, for example, for generating through holes in the workpiece. One advantage of laser tools over rotary machining tools of the type that remove material by physical contact with the workpiece is that in the case of a laser tool, there is no need for direct physical contact between the tool and the workpiece, whereby problems related to frictional wear of the tool, vibrations, and/or deformation of the workpiece due to the forces exerted on the workpiece by the tool, can be avoided or reduced. Also, a laser tool can be used to carry out machining operations that are not limited by the characteristics of the tool itself in what regards, for example, shapes and dimensions. For example, rotary drilling tools are typically only useful for carrying out holes with a specific diameter. Thus, the use of one or more laser tools can enhance flexibility, and allow a large number of different machining operations, such as the generation of holes with different shapes and sizes, to be carried out without any need for tool change operations.

In some embodiments of the invention, at least another one of the tools is a rotary tool, such as a tool for milling, drilling, or boring, adapted for removal of material from the at least one workpiece. That is, and differently from what is the common practice in the art, the machine tool can incorporate both one or more laser tools and one or more rotary tools. Whereas typically distinction is made between machines for laser cutting and machine tools using rotary tools (for milling, drilling, etc.), it has been found that it can sometimes be advantageous to incorporate both kinds of tools in a single machine tool, as this can optimize performance, for example, due to a reduction of the number of tool changes needed to complete the machining, and/or to reduce cycle times, and/or to enhance quality and/or to minimize wear of components. For example, and whereas sometimes rotary machining tools can be preferred or even necessary to carry out certain operations (for example, due to the difficulty in accessing an internal wall due to the gas nozzle typically present on a tool for laser cutting), other operations can preferably be carried out using a laser tool. For example, the creation of through holes in a relatively thin flange extending from the main body of a profile in an overhanging manner can sometimes preferably be carried out using a laser tool, as a rotary tool may deflect the flange and thereby create the opening in the wrong position, and/or cause the flange to vibrate, thereby causing wear of the tool and/or creating an opening in the wrong position and/or with the wrong dimensions and/or with poor finish. Here, a laser tool may be preferred. Also, laser tools can easily be used to create openings with different dimensions and shapes without any need for a tool change. However, for other machining operations, such as for the machining of a large number of openings having the same diameter, and for milling operations, rotary drilling and/or milling tools may be the most efficient option in terms of cost, cycle times and/or quality.

In some embodiments of the invention, the workpiece support is arranged for supporting at least one workpiece and for pivoting the at least one workpiece around an axis parallel with an X axis of the machine tool. This pivotation can be useful for, for example, shifting the workpiece from a position for loading and unloading the workpieces onto and from the workpiece support, respectively, and also for adapting the orientation of the workpiece in relation to the respective tool or tools so as to set a desired angle of attack between a tool and the workpiece. Thus, pivotation of the workpiece can be used instead of pivoting the tool, in order to set the desired angle of attack between a laser beam or a rotary tool, and the workpiece. Conventionally, in laser cutting machines, the workpiece is placed in a fixed position, such as on a supporting table, without any means for pivotation being provided for pivoting the workpiece around any axis. Any setting of the angle of attack is typically performed by pivoting the laser tool. Whereas the full laser equipment, including the subsystem for generation of the laser beam, typically is rather sturdy and voluminous, the laser head that has to be positioned in relation to the workpiece, and which is typically connected to the subsystem for generation of the laser beam via a light guide, can be small and lightweight and easy to manipulate. Thus, in the technical field of laser cutting, workpieces are typically stationary during machining, or displaced in a linear direction on some kind of conveyor.

In some embodiments of the invention, the workpiece support is arranged for supporting a plurality of workpieces, for example, a plurality of elongate workpieces extending in parallel with the X axis of the machine tool, and for pivoting the plurality of workpieces around respective axes parallel with the X axis of the machine tool. The simultaneous presence of a plurality of workpieces in the workpiece support can serve to enhance productivity not only because several workpieces can be machined between each cycle of loading and unloading, but sometimes also because more efficient use may be made of the tools. For example, sometimes one or more laser tools can be used to machine one workpiece whereas rotary tools are operating on another workpiece. Also, a rotary tool can be used to carry out a sequence of machining operation on more than one workpiece using a specific tool, before carrying out a tool change operation. Also, a laser tool may be used to carry out machining operations on more than one workpiece, thereby making more efficient use of the available laser equipment. Thus, the use of a plurality of different tools, such as a combination of rotary tools and laser tools, in combination with the presence of more than one workpiece in the workpiece support, can serve the enhance the efficient use of the tools, minimizing downtimes such as downtimes due to tool replacement operations, and optimizing the efficient use of expensive equipment, such as expensive laser equipment.

In some embodiments of the invention, the machine tool comprises at least one tool carrier support that is controllably displaceable in parallel with a first axis of the machine tool (such as the X axis of the machine tool), wherein each tool carrier support supports at least one tool carrier, each tool carrier supporting a respective one of the plurality of tools so that the at least one laser tool is carried by a respective one of the tool carriers, wherein each tool carrier is controllably displaceable in relation to the tool carrier support according to at least a second axis of the machine tool (such as a Y and/or Z axis of the machine tool, perpendicular to the X axis). That is, the tools are displaceable according to at least two axes, such as the X and Y axis of the system, due to the controlled displacement of the tool carrier support(s) and due to the controlled displacement of the tool carriers in relation to the tool carrier support(s). For example, the tool carrier supports can be controllably displaceable in parallel with a horizontal X axis of the system, and the tool carriers can be mounted on the tool carrier supports so that they are displaceable in parallel with a Y axis of the system, perpendicular to the X axis, and/or in parallel with a Z axis perpendicular to the X and Y axes, the movement in parallel with the Z axis serving the displace the tools towards and away from the workpieces, respectively.

In some embodiments of the invention, the at least one tool carrier support is controllably displaceable in parallel with an X axis of the machine tool, and each tool carrier is mounted on the respective tool carrier support so that it is displaceable in relation to the tool carrier support in parallel with a Y axis of the machine tool and in parallel with a Z axis of the machine tool, wherein the movement in parallel with the Z axis serves to displace the tool carrier towards and away from the workpiece support, respectively.

In some embodiments of the invention, the Y axis is a vertical axis, and the at least one tool carrier support is configured as a horizontally displaceable column, the tool carriers being arranged on the respective column so that they are displaceable along the column in the vertical direction in parallel with the Y axis, and perpendicularly to the column in parallel with the Z axis. This is a configuration which is known in the context of chip removing machine tools, see for example GB-2262461-A and US-2757560-A. This configuration differs from the one typically used for laser cutters, but has proven to be advantageous when it comes to, for example, simultaneous machining of several workpieces, for example, profiles arranged in parallel with the X axis, one above the other. Thus, this configuration can be especially advantageous in the context of "mixed" machine tools involving both laser tools and rotary tools.

In some embodiments of the invention, the machine tool comprises two tool carrier supports, wherein a first one of the tool carrier supports supports at least one tool carrier adapted for carrying a rotary tool, and wherein a second one of the two tool carrier supports supports at least one tool carrier adapted for carrying a laser tool. For example, one of the tool carrier supports can carry only tool carriers with rotary tools, whereas the other tool carrier can carry only laser tools. One advantage of this arrangement is that only one of the tool carrier supports needs to be associated with a tool magazine for tool replacement. For example, the tool magazine can be placed at one end of the track followed by the tool carrier supports, so that it can be accessed by the tool carriers carrying rotary tools: there is no need for the tool carriers carrying laser tools to access the tool magazine. The tool magazine can be placed so that when the first one of the tool carrier support moves to the tool change position, the entire workpieces can be accessed by the laser tools, so that the laser tools can carry out machining operations at the ends of the workpieces proximate to the tool change position, while the tool change is being carried out. This can even more serve to enhance the efficiency of the process and maximize the time during which the tools are operating during each machining cycle.

In some embodiments of the invention, M of the tool carriers are adapted for carrying a laser tool and N of the tool carriers are adapted for carrying a rotary tool, M and N being integer numbers ≥1, M being different from N. Whereas in some of the above described layouts the most straight-forward option could be to use the same number of tool carriers for rotary tools as for laser tools, for example, one rotary tool and one laser tool assigned to each workpiece for simultaneous machining of a plurality of workpieces, from a cost perspective it may be preferrable to use, for example, a larger number of rotary tools than laser tools. As laser tools can typically be expensive and may be needed or preferred only for a certain subset of operations, and as they do not require tool changes and thus can operate without any corresponding interruptions, it can sometimes be preferred to use a smaller number of tool carriers for laser tools than for rotary tools. For example, in some embodiments a tool carrier support can support 2 (or 4,...) tool carriers adapted for rotary tools, whereas the other tool carrier support may support only 1 (or 2...) tool carriers carrying laser tools. Thus, for example, 2 (or 4...) workpieces can, for example, be simultaneously machined by respective ones of the 2 (4,...) rotary tools, whereas 1 (2,...) laser tools can be used to operate on the workpieces, so that each laser tool operates on two (or more) of the workpieces, for example, shifting between one of them and another one of them. Obviously, these numbers are just examples, and there is no need for any fixed ratio between the number of rotary tools and the number of laser tools: the right proportion can be set by considering aspects such as costs of the components, costs due to wear of tools, cycle times, quality, etc.

In some embodiments of the invention, at least one tool carrier carrying a laser tool is controllably displaceable, such as in parallel with the Y axis of the machine tool, so that the respective laser tool can be brought into positions that allow it to sequentially operate on more than one workpiece of a plurality of workpieces aligned in parallel in the workpiece support, such as extending in parallel with the X axis, and arranged one after the other along the Y axis, such as one above the other when the Y axis is a vertical axis of the machine tool.

Another aspect of the invention relates to a method of operating a machine tool, such as a machine tool as described above, comprising the steps of:
- loading at least one workpiece, such as an elongate workpiece, onto a workpiece support of the machine tool;
- carrying out a plurality of machining operations on the workpiece using at least two tools carried by at least two different tool carriers forming part of the machine tool, the tool carriers optionally being displaceable in relation to the workpiece support according to an X axis, a Y axis and a Z axis of the machine tool, the X, Y and Z axes being orthogonal axes (that is, each one of these axes is perpendicular to the other two axes);
- optionally, pivoting the at least one workpiece between two of the machining operations so as to set a predetermined angle of attack between the respective tool and the workpiece;
- unloading the at least one workpiece from the workpiece support;
wherein at least one of the tools is laser tool, and wherein the plurality of machining operations include at least some operations involving removal of material from the workpiece using a laser beam emitted from the at least one laser tool.

In some embodiments of the invention, at least another one of the tools is a rotary tool, such as a tool for milling or drilling, and the machine tool further comprises a tool magazine supporting a plurality of rotary tools. In these embodiments, the plurality of machining operations include at least some operations involving removal of material using rotary tools, and the method further comprises carrying out at least one tool change operation at the tool magazine for replacing a rotary tool carried by one of the tool carriers by another rotary tool.

In some of these embodiments, the method further comprises:
- Carrying out at least some machining operations with a laser tool while the at least one tool change operation is taking place (as the laser tools typically do not need to be replaced, efficient use of the laser equipment can involve continuing to carry out laser machining while at least some of the tool carriers with rotary tools are not carrying out machining operations due to the need to displace them to face the tool magazine, carry out the tool change, and return to a position for continued machining of the workpiece).
   And/or:
- Carrying out at least some and optionally all of the machining operations involving the use of a laser tool before initiating a first machining operation involving the use of a rotary tool, at least as far as a certain segment of the workpiece is concerned, the segment corresponding to portion of 10, 25 or 50% of the extension of the workpiece in its longitudinal direction when the workpiece is an elongate workpiece. It has been found that it may be preferable to carry out the laser machining operations, or at least some of them, such as those focused on a certain segment of the workpiece, prior to initializing the machining using rotary tools, to avoid chips and debris produced by the rotary tool from interfering with the laser equipment. For example, the machining can be initiated by laser machining on one end of the workpiece, and the tool carriers with the laser tools can then move towards the other end of the workpiece while carrying out different machining operations, and when they have reached a certain distance from the first end of the workpiece, such as a distance of more than 25, 50, 75 or 100 cm, machining with the rotary tools can be initiated starting in the proximity of the first end of the workpiece;
   And/or:
- Shifting at least one tool carrier (21) carrying a laser tool (21A) between a position for machining a first workpieces and a position for machining a second workpiece, the workpieces being arranged in parallel in a workpiece support. Whereas laser equipment can be relatively expensive, an advantage therewith is that there is no need for tool changes. Thus, in some embodiments of the invention, simultaneous machining of a plurality of workpieces can take place using one tool carrier with rotary tools for each workpiece, such that each tool carrier operates only on a single one of the workpieces, whereas the same laser tool can be used for machining more than one workpiece, such as for machining all of the workpieces. This can enhance efficient use of the laser equipment, which can operate during, for example, tool change operations, and/or be used only for the machining operations that are especially suitable for laser machining, such as machining of sensitive portions such as overhanging flanges, machining of through holes having shapes or sizes differing from most of the other through holes, etc.

A further aspect of the invention relates to a method of configuring and/or producing a machine tool on the basis of a basic machine tool layout, such as a machine tool layout involving at least one, such as two, tool carrier supports moveable in parallel with an X axis of the machine tool, and featuring means such as a sledge member for supporting tool carriers and for displacing the tool carriers in parallel with a Y axis of the machine tool, and optionally means for displacing tool carriers in parallel with a Z axis of the machine tool, the machine tool optionally including a workpiece support for supporting a plurality of workpieces in parallel, such as one after the other along an axis parallel with the Y axis of the machine tool. The method comprises the following steps:
A) determining machining requirements for completing the machining of one or more workpieces during a machining cycle including, at least, the period starting with the first machining operation after loading the workpiece or workpieces into the machine tool, and the last machining operation prior to unloading the workpiece or workpieces from the machine tool;
B) selecting a combination of tools to be used for complying with the machining requirements, from a group of tools including at least one laser tool and a plurality of rotary tools;
C) defining a machine tool including tool carriers for carrying the selected tools.

Steps B) and/or C) are carried out so as to optimize the efficiency of the machine tool, taking into account:
- cycle time (in particular, the time needed for completing the machining of one workpiece), and/or productivity (in terms of the number of workpieces that can be produced during a unit of time, such as during one hour), and
- cost, including cost of the original equipment and maintenance costs, including the estimated costs due to wear on tools.

It is frequent in the art that providers of machine tools offer machine tools having a predetermined configuration, for example, machine tools with rotary tools, machine tools with a laser cutting tool, etc., whereby the purchaser chooses the machine tool that is considered to be best suited for the purchasers needs. Also, typically, if the purchaser considers that a certain workpiece requires machining both by rotary tools (milling,drilling) and by laser tools (for example, due to the need to perforate certain overhanging parts that may be bent or caused to vibrate excessively if rotary tools are used, or due to the need to carry out a large number of through holes having different dimensions, etc.), the purchaser would typically chose a first machine tool for the operations requiring rotary tools, and a second machine tool for the operations to be carried out using a laser tool. Contrarily, the present method involves considering both laser tools and rotary tools as options that can be combined within the same machine tool, whereby the final configuration is determined taking into account, for example, cycle time and costs.

In some embodiments of the invention, the method comprises defining the machine tool to comprise M tool carriers adapted for carrying a laser tool and N tool carriers adapted for carrying a rotary tool, M and N being integer numbers ≥1, M being different from N. That is, in some embodiments, the machine tool can comprise, for example, a larger number of tool carriers adapted for rotary tools than the number of tool carriers adapted for laser tools, or vice-versa. For example, one tool carrier support may carry N tool carriers adapted for carrying rotary tools, for example, so that each tool carrier is associated to one of N workpieces intended to be supported simultaneously in the workpiece support, for simultaneous machining of the N workpieces, whereas the other tool carrier support may support a smaller number M of tool carriers supporting laser tools, whereby at least one laser tool is intended to operate sequentially on more than one of the workpieces. Thus, during a machining cycle and between loading the workpieces onto the workpiece support and unloading the workpieces from the workpiece support, at least one tool carrier with its laser tool will be shifted from a position for machining of one of the workpieces, to a position for machining of another one of the workpieces.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Figure 1 is a perspective view of an example of a workpiece than can be machined with a machine tool and method according to embodiments of the invention.
Figure 2 is a perspective view of a machine tool according to an embodiment of the invention.
Figures 3A and 3B are perspective views of a machine tool according to another embodiment of the invention.
Figures 4 and 5 are flowcharts reflecting steps or stages of methods according to embodiments of the invention.
Figure 6 is a flowchart schematically illustrating the considerations underlying a method of configuring and producing a machine tool according to an embodiment of the invention.

### DESCRIPTION OF WAYS OF CARRYING OUT THE INVENTION

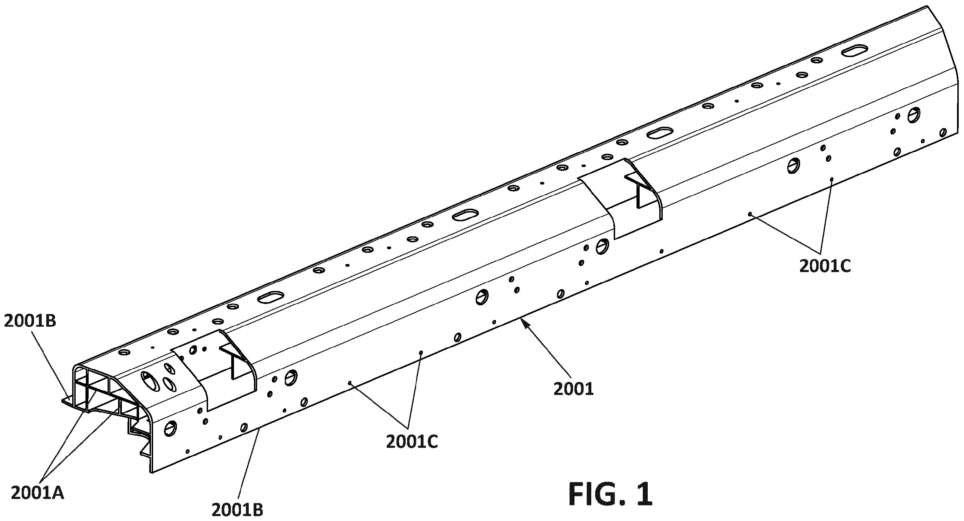

Figure 1 illustrates an example of a workpiece that can be machined using a machine tool according to an embodiment of the invention, for example, one of the embodiments described below. The illustrated workpiece 2001 is an extruded aluminium profile featuring a body with internal partition walls 2001A and with flanges 2001B extending from the main body in an overhanging manner, that is, flanges that are supported only at one of their longitudinal ends. As explained above, this may imply a problem when openings 2001C are to be machined in the flanges using a rotary machine tool: the flanges may be displaced and vibrations may cause the openings to be misplaced, incorrectly shaped or dimensioned, and/or cause undesired wear to the tool. Thus, it has been found that for machining this kind of openings, laser cutting may be preferred. However, for other openings, such as some openings in the internal partition walls 2001A, rotary tools may be preferred, which can penetrate both the external wall and the internal partition wall, as conventional in the art.

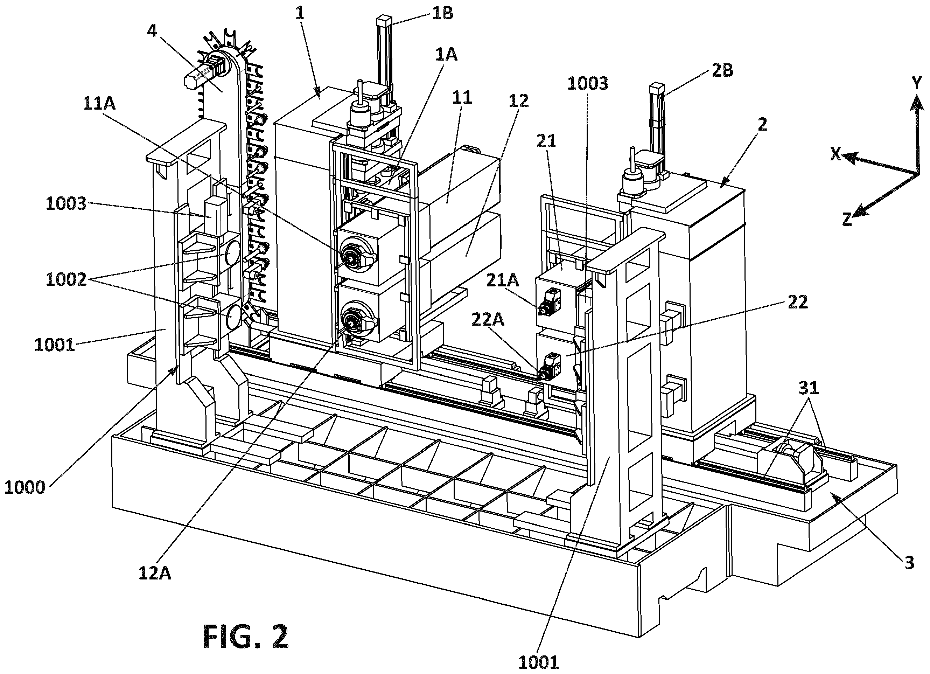

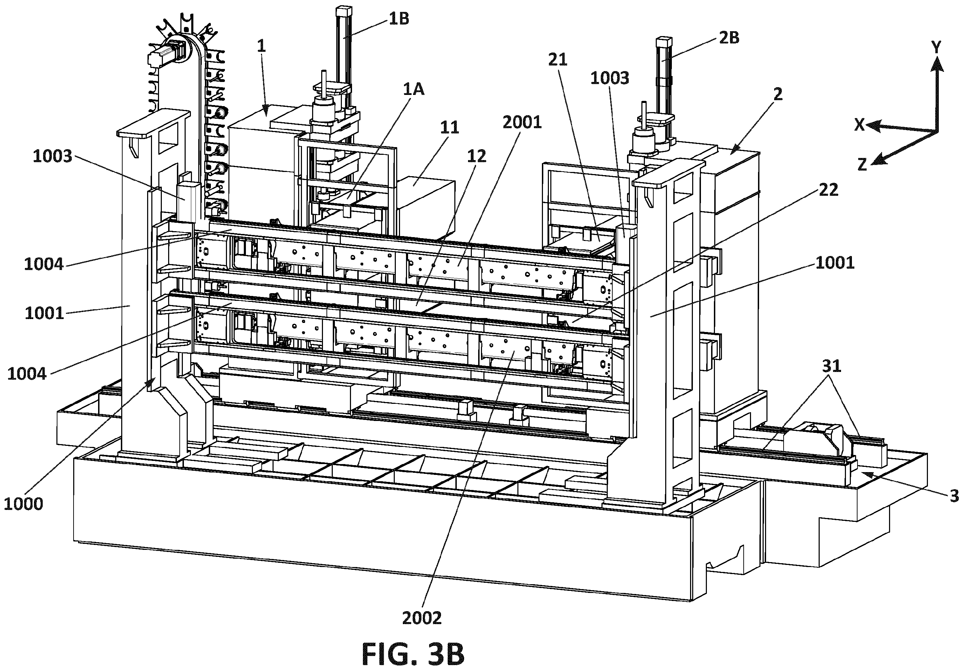

Figure 2 illustrates a machine tool according to an embodiment of the invention. The machine tool comprises a workpiece support 1000 comprising two vertically extending columns 1001 provided with schematically illustrated means 1002 for supporting respective workpiece holding devices (not shown in figure 2, but they can be implemented as shown in figure 3B) arranged for clamping a workpiece, such as a workpiece like the one illustrated in figure 1. In other embodiments, the means 1002 can be arranged to directly hold the respective workpiece by its ends. The workpiece support 1000 includes drive means 1003 for pivoting or rotating the workpiece holding devices and the workpieces, for example, so as to set a desired angle of attack between the workpiece and the tools, and/or for shifting the workpiece between a position for loading and unloading the workpiece onto and from the workpiece holding device, respectively, in which the workpiece faces away from the tools, and a machining position, in which the workpiece faces the tools so that the tools can access the workpiece.

The machine tool further comprises two tool carrier supports 1 and 2, in this case configured as vertically extending columns that are controllably displaceable in parallel with a first axis, namely, a horizontal X axis of the machine tool. The columns are controllably displaceable on a machine bed 3 provided with guide means 31, in this case schematically illustrated guide rails. The columns 1, 2 are driven in parallel with the X axis by non-illustrated drive means, for example, by one or more electric motors mounted on the columns for driving them in parallel with the X axis, for example, by means of one or more pinions driven by the respective motor interacting with a rack. That is, the columns may be controllably displaceable along the X axis by an electrically operated pinion-rack drive. In other embodiments, other kinds of drive means may be used. The use of two motors per tool assembly may be preferred in order to reduce the play between pinions and rack.

Although in this embodiment the tool carrier supports are embodied as vertically extending columns, in other embodiments other configurations may be used. For example, the columns may extend in the horizontal plane, and/or the tool carrier supports may not be embodied as columns.

In the illustrated embodiment, two tool carriers are arranged on each of the columns. In particular, two tool carriers 11, 12 carrying rotary tools 11A, 12A are arranged on a vertically controllably displaceable sledge member 1A attached to the first column 1, whereas two tool carriers 21, 22 carrying laser tools 21A, 22A are arranged on a vertically controllably displaceable sledge member (not visible in figure 2) attached to the second column 2. The sledge members are displaceable along the columns in parallel with the vertical Y axis (a second axis of the machine tool), driven by corresponding drive means 1B, 2B. The drive means may comprise one or more electric motors, which may operate, for example, a pinion-rack mechanism or any other suitable mechanism.

Each tool carrier 11, 12, 21, 22 is controllably displaceable in relation to the corresponding sledge member and column in parallel with a third axis of the machine tool, namely, the Z axis, in this embodiment a horizontal axis perpendicular to the horizontal X axis. In this embodiment, the rotary tools 11A, 12A are rotated around respective axes parallel with the Z axis during machining. In this embodiment, the displacement of the tool carriers in parallel with the Z axis is produced by corresponding electric motors (not shown in figure 2) which, in this embodiment, drive respective ball screw mechanisms for displacing the respective tool carrier in parallel with the Z axis. However, obviously, any other kind of suitable drive system may be used. The movement in the Z direction can be used to bring the tool carried by the respective tool carrier 11, 12, 21 and 22 into a position for operating on the respective workpiece (in the case of the rotary tools, a position in which the tool contacts the workpiece, and in the case of the laser tools, a position in which the tool is at an appropriate distance from the workpiece for machining, taking into account aspects such as optical focus, position of the gas exhaust nozzle, etc.), and to bring the tool away from the workpiece. In this embodiment, the movement of each tool carrier in parallel with the Z axis is independent of the movement of the other tool carriers in parallel with the Z axis: each tool carrier has its own drive means. The movement in the Z direction can also be relevant for tool change operations, in particular, for the change of the rotary tools. For this purpose, a tool magazine 4 is provided at an end of the machine tool along the X axis that is closer to the first tool carrier support 1 than to the second tool carrier support 2, that is, at the end of the machine tool that corresponds to the rotary tools 11A, 12A. The position of the tool magazine along the X axis is beyond the position occupied by the workpieces during machining, in order that the laser tools 21A, 22A be able to access any portion of the workpiece that may require laser machining, when the first tool carrier support 1 is in a tool change position, with its tool carriers 11 and 12 facing the tool magazine 4 along the Z axis.

Thus, as can be readily understood from figure 2, a workpiece arranged in the workpiece support 1000 can be machined at any position throughout its entire length by a rotary tool 11A or 12A, such as a milling or drilling tool, supported in a tool carrier 11 or 12 mounted on the first tool carrier support 1, and by a laser tool 21A or 22A mounted in a tool carrier 21 or 22 mounted on the second tool carrier support 2. For example, the machine tool may be operated to first carry out all or most of the machining operations assigned to the laser tools, and to subsequently carry out all or most of the machining operations assigned to the rotary tools, for example, so as to prevent chips or other debris generated by the machining operations carried out by the rotary tools from interfering with the laser beams from the laser tools. Also, or alternatively, the machine tool may be operated to carry out machining operations with the rotary tools and with the laser tools simultaneously and/or in an interleaved manner. For example, some operations using the laser tools may be carried out while the first tool carrier support 1 is in a tool change position.

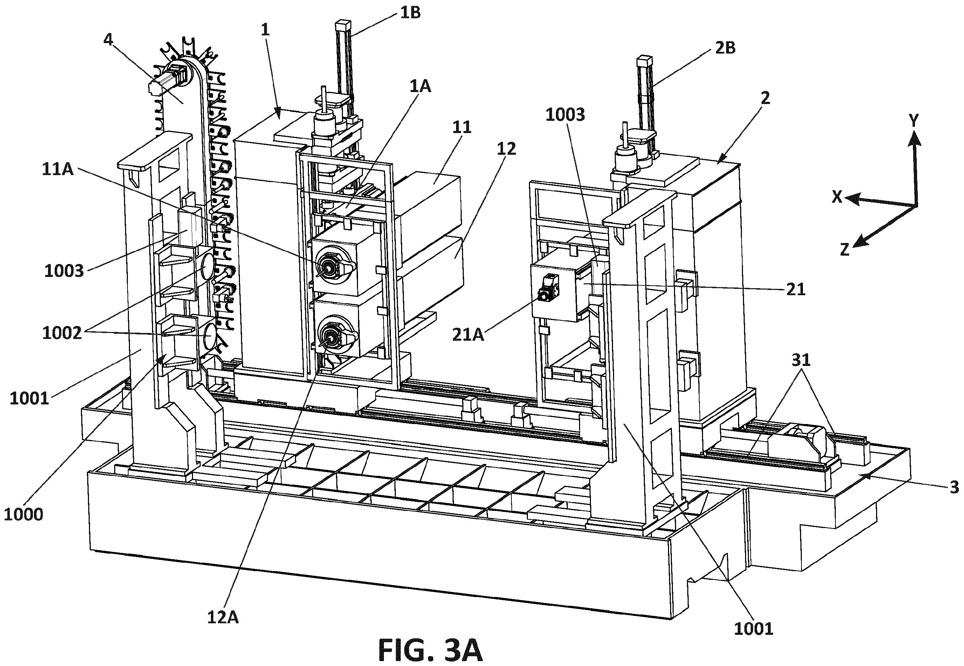

Figure 3A shows another embodiment, based on the same basic machine tool layout as the one of figure 2, but not including the second tool carrier 22 carrying a laser tool. That is, the machine tool of figure 3A only has one tool carrier 21 carrying a laser tool 21A, but two tool carriers 11, 12 carrying rotary tools 11A, 12A. The single laser tool 21A is thus used for machining of both workpieces 2001 and 2002, for example, carrying out machining of these workpieces prior to initiating the machining using the rotary tools 11A, 12A carried by the tool carriers 11, 12 mounted on the first tool carrier support 1, and/or carrying out laser machining of these workpieces while the first tool carrier support is displaced to the tool magazine 4 for tool change operations, just to give some examples. The tool carrier 21 with the laser tool 21A is displaced in parallel with the Y axis so as to shift the laser tool 21A from a position along the Y axis suitable for operating one on of the workpieces (facing it along the Z axis) to a position along the Y axis suitable for operating on the other one of the workpieces (facing it along the Z axis).

Figure 3B illustrates the embodiment of figure 3A but here also the workpiece holding devices 1004 are shown, attached to the means for holding them 1003 earlier described with reference to figure 2. The workpiece holding devices 1004 are clamping the respective workpieces 2001, 2002. In the illustrated position the workpieces are facing towards the side on which the tools are arranged so that the tools can access the workpieces for machining, under an angle of attack that can be set by pivoting the workpiece holding devices 1004 around their longitudinal axes (that is, around axes parallel with the X axis of the machine tool). Also, after machining, the workpiece holding devices can be pivoted by for example approximately 180 degrees so that the workpieces face away from the tools, whereby the operations of loading and unloading the workpieces onto and from the workpiece support, respectively, can be facilitated.

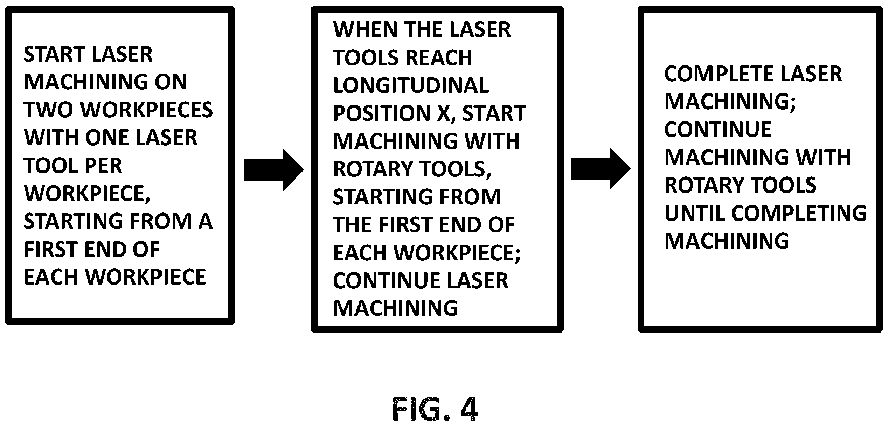

Figure 4 is a flowchart showing some stages of a method according to an embodiment of the invention, which can be implemented using, for example, a machine tool according to the embodiment of figure 2. After loading the workpieces onto the workpiece support and clamping them, the tool carrier support 2 can be positioned so as to face a position proximate to the ends of the workpieces that are closest to the tool magazine 4, and start laser machining of the workpieces from those ends, moving towards the other ends of the workpieces. In some embodiments of the invention, the laser machining may be completed prior to initializing machining using the rotary tools. However, in the embodiment of figure 4, the machining using rotary tools is initiated before the termination of the laser machining, for example, once the laser tools have reached a position along the X that is sufficiently far removed from the position where the machining using rotary tools is initiated, in order that the risk of chips removed by the rotary tools interfering with the laser tools is deemed sufficiently small. This kind of overlap between laser machining and machining using the rotary tools can serve to reduce the cycle time.

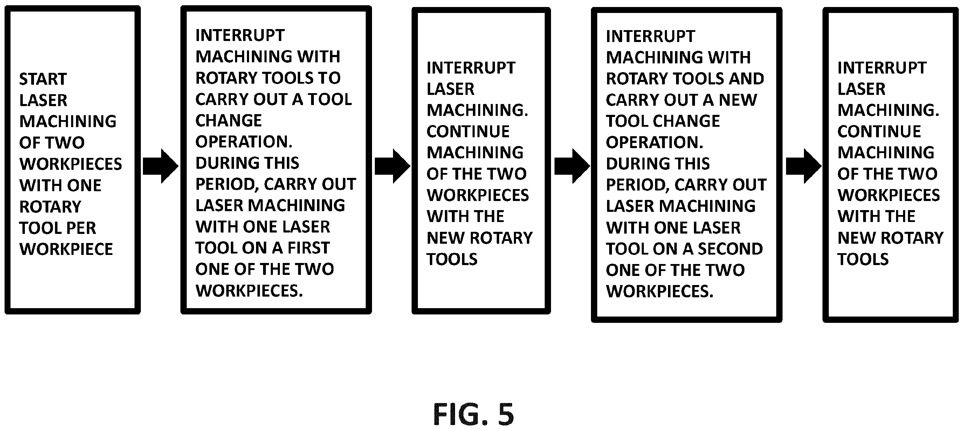

Figure 5 is a flowchart showing some stages of a method according to an embodiment of the invention which can be implemented using, for example, a machine tool according to the embodiment of figure 3, with two tool carriers 11, 21 for rotary tools and only one tool carrier 21 for a laser tool. One way of operating such a machine tool, illustrated in the flowchart of figure 5, involves using the periods during which tool change operations are taking place at the tool magazine 4, for carrying out laser machining operations. During a first tool change operation the laser tool 21A can, for example, carry out operations on a first one of the two workpieces, and during a second tool change operation the laser tool 21A can, for example, carry out tool change operations on a second one of the two workpieces.

As readily understood from these examples, there are multiple ways in which the invention can be carried out, thereby making it possible to optimize aspects such as cycle time and productivity, quality, and cost, for example, in view of the characteristics of the workpieces and the need for productivity. The number of workpieces to be machined simultaneously and the number of rotary tools and laser tools, for example, the number of tool carriers assigned to each tool carrier support and the kind of tool (rotary tool, laser tool) assigned to each tool carrier can be decided and/or modified depending on aspects such as the kind of machining operations that are to be carried out on each workpiece, and the relation or ratio between the number of machining operations (and/or the time to be assigned to the machining operations) that need to be carried out by rotary tools (for example, due to accessibility issues), that need to be carried out by laser tools (for example, due to the need to operate on parts such as thin overhanging flanges), and that can be carried out both by rotary tools and by laser tools.

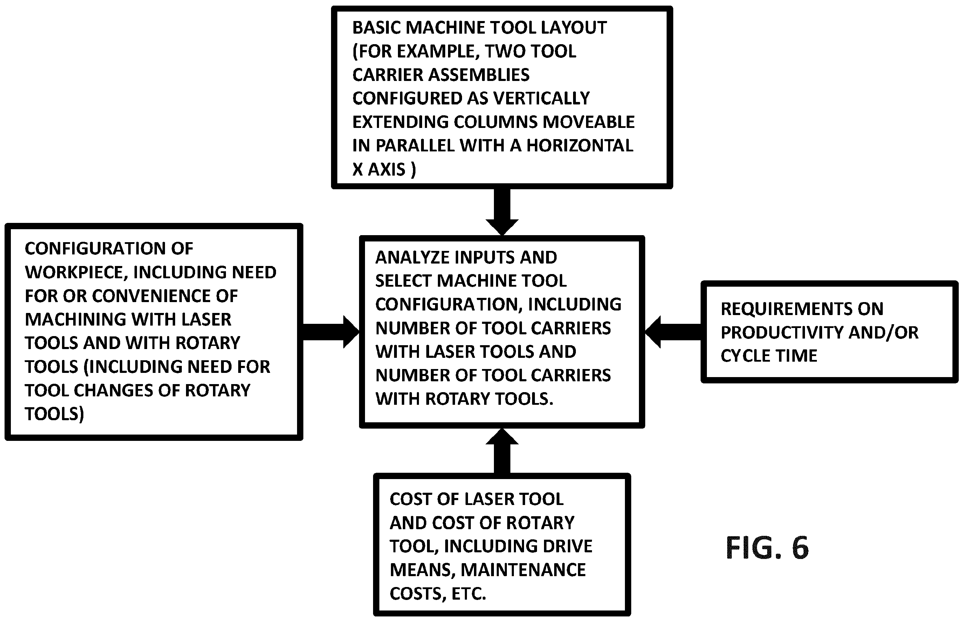

Figure 6 schematically illustrate the process of selecting the configuration of the machine tool, starting from a basic machine tool layout or configuration, such as, for example, the one of figures 2 and 3 but without the tool carriers, the tool magazine and the workpiece support. That is, the basic machine tool configuration may include the machine bed and the two workpiece carrier supports (or one of them).

Based on a specific workpiece layout, a first aspect to consider is the need for machining using rotary tools and laser tools: sometimes it is necessary to use at least one of these kinds of tools, sometimes both kinds of tools are necessary. A further aspect to consider is the cost involved with each type of tool: the laser equipment, the drive means for the rotary tools, maintenance costs, including the cost of replacement of rotary tools due to wear, etc. And a further aspect to consider is the need for productivity. Based on these aspects, a machine tool configuration is selected, including the workpiece support (in particular, the number of workpieces to be machined in parallel, that is, supported simultaneously in the workpiece support), the number of tool carriers with rotary tools, and the number of tool carriers with laser tools. For example, if the laser tool is needed or recommended only for a minor number of machining operations whereas most machining operations are preferably carried out using rotary tools, a configuration as per figure 3 may sometimes be preferred over the configuration as per figure 2, whereby a single laser tool can be used for carrying out all laser machining operations needed for both workpieces, for example, operating on the workpieces when the tool carrier support 1 with the rotary tools is in its tool change position.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A machine tool comprising:
a workpiece support (1000) for supporting at least one workpiece (2001, 2002) for allowing machining of the workpiece;
and
a plurality of tools (11A, 12A, 21A, 22A) adapted for machining of the at least one workpiece;
the machine tool being adapted for positioning the tools in relation to the workpiece support,
wherein
at least one of the tools is a laser tool (21A, 22A) adapted for removal of material from the at least one workpiece.

2. The machine tool according to claim 1, wherein at least another one of the tools is a rotary tool (11A, 12A) adapted for removal of material from the at least one workpiece.

3. The machine tool according to any one of the preceding claims, wherein the workpiece support (1000) is arranged for supporting at least one workpiece (2001, 2002) and for pivoting the at least one workpiece (2001, 2002) around an axis parallel with an X axis of the machine tool.

4. The machine tool according to claim 3, wherein the workpiece support (1000) is arranged for supporting a plurality of workpieces (2001, 2002), for example, a plurality of elongate workpieces extending in parallel with the X axis of the machine tool, and for pivoting the plurality of workpieces (2001, 2002) around respective axes parallel with the X axis of the machine tool.

5. The machine tool according to any one of the preceding claims, comprising at least one tool carrier support (1, 2) that is controllably displaceable in parallel with a first axis (X) of the machine tool, wherein each tool carrier support supports at least one tool carrier (11, 12; 21, 22), each tool carrier supporting a respective one of the plurality of tools (11A, 12A; 21A, 22A) so that the at least one laser tool (21A, 22A) is carried by a respective one of the tool carriers (21, 22), wherein each tool carrier (11, 12; 21, 22) is controllably displaceable in relation to the tool carrier support according to at least a second axis of the machine tool.

6. The machine tool according to claim 5, wherein the at least one tool carrier support (1, 2) is controllably displaceable in parallel with an X axis of the machine tool, and wherein each tool carrier (11, 12; 21, 22) is mounted on the respective tool carrier support so that it is displaceable in relation to the tool carrier support in parallel with a Y axis of the machine tool and in parallel with a Z axis of the machine tool, wherein the movement in parallel with the Z axis serves to displace the tool carrier towards and away from the workpiece support, respectively.

7. The machine tool according to claim 6, wherein the Y axis is a vertical axis, wherein the at least one tool carrier support (1, 2) is configured as a horizontally displaceable column, the tool carriers (11, 12; 21, 22) being arranged on the respective column so that they are displaceable along the column in the vertical direction in parallel with the Y axis, and perpendicularly to the column in parallel with the Z axis.

8. The machine tool according to any one of claims 5-7, comprising two tool carrier supports (1, 2), wherein a first one (1) of the tool carrier supports supports at least one tool carrier (11, 12) adapted for carrying a rotary tool (11A, 12A), and wherein a second one (2) of the two tool carrier supports supports at least one tool carrier (21, 22) adapted for carrying a laser tool (21A, 22A).

9. The machine tool according to any one of claims 5-8, wherein M of the tool carriers are adapted for carrying a laser tool and wherein N of the tool carriers are adapted for carrying a rotary tool, M and N being integer numbers ≥1, M being different from N.

10. The machine tool according to any one of claims 5-9, wherein at least one tool carrier (21, 22) carrying a laser tool (21A, 22A) is controllably displaceable so that the respective laser tool can be brought into positions that allow it to sequentially operate on more than one workpiece of a plurality of workpieces aligned in parallel in the workpiece support (1000).

11. A method of operating a machine tool, such as a machine tool according to any one of the preceding claims, comprising the steps of:
- loading at least one workpiece (2001, 2002) onto a workpiece support (1000) of the machine tool;
- carrying out a plurality of machining operations on the workpiece using at least two tools (11A, 12A; 21A, 22A) carried by at least two different tool carriers (11, 12; 21, 22) forming part of the machine tool, the tool carriers optionally being displaceable in relation to the workpiece support (1000) according to an X axis, a Y axis and a Z axis of the machine tool, the X, Y and Z axes being orthogonal axes;
- optionally, pivoting the at least one workpiece (2001, 2002) between two of the machining operations so as to set a predetermined angle of attack between the respective tool and the workpiece;
- unloading the at least one workpiece (2001, 2002) from the workpiece support (1000);
wherein at least one of the tools is laser tool (21A, 22A), and wherein the plurality of machining operations include at least some operations involving removal of material from the workpiece using a laser beam emitted from the at least one laser tool.

12. The method according to claim 11, wherein at least another one of the tools is a rotary tool (11A, 12A), such as a tool for milling or drilling, and wherein the machine tool further comprises a tool magazine (4) supporting a plurality of rotary tools, wherein the plurality of machining operations include at least some operations involving removal of material using rotary tools (11A, 12A), wherein the method further comprises carrying out at least one tool change operation at the tool magazine (4) for replacing a rotary tool carried by one of the tool carriers (11, 12) by another rotary tool.

13. The method according to claim 12, wherein the method further comprises:
- carrying out at least some machining operations with a laser tool while the at least one tool change operation is taking place; and/or
- carrying out at least some and optionally all of the machining operations involving the use of a laser tool before initiating a first machining operation involving the use of a rotary tool, at least as far as a certain segment of the workpiece is concerned, the segment corresponding to portion of 10, 25 or 50% of the extension of the workpiece in its longitudinal direction when the workpiece is an elongate workpiece; and/or
- shifting at least one tool carrier (21) carrying a laser tool (21A) between a position for machining a first workpieces and a position for machining a second workpiece, the workpieces being arranged in parallel in a workpiece support.

14. A method of configuring a machine tool on the basis of a basic machine tool layout, the method comprising the following steps:
A) determining machining requirements for completing the machining of one or more workpieces during a machining cycle;
B) selecting a combination of tools (11A, 12A; 21A, 22A) to be used for complying with the machining requirements, from a group of tools including at least one laser tool and a plurality of rotary tools;
C) defining a machine tool including tool carriers (11, 12; 21, 22) for carrying the selected tools;
wherein steps B) and/or C) are carried out so as to optimize the efficiency of the machine tool, taking into account:
- cycle time and/or productivity, and
- cost.

15. The method according to claim 14, comprising defining the machine tool to comprise M tool carriers adapted for carrying a laser tool and N tool carriers adapted for carrying a rotary tool, M and N being integer numbers ≥1, M being different from N.
